# FASCICULE DE BREVET EUROPEEN

(11) **EP 2 178 757 B1**
(45) Date de publication et mention de la délivrance du brevet: **23.03.2011**
(21) Numéro de dépôt: 08786421.1
(22) Date de dépôt: 25.07.2008
(51) Int. Cl.: B64D 29/06, B64D 29/08

(54) **NACELLE DE TURBOREACTEUR A AMORTISSEURS POUR DEMI-COQUILLES**
TRIEBWERKSGONDEL MIT DÄMPFERN FÜR HALBSCHALEN
A JET ENGINE NACELLE HAVING DAMPERS FOR HALF-SHELLS

(30) Priorité: 20.08.2007 FR 0705939
(43) Date de publication de la demande: 28.04.2010
(73) Titulaire: Aircelle, 76700 Gonfreville L'Orcher (FR)
(72) Inventeur: PROVOST, Fabrice, F-76280 Criquetot-l'esneval (FR)
(74) Mandataire: Chevalier, Renaud Philippe
(86) Numéro de dépôt international: PCT/EP2008/059760
(87) Numéro de publication internationale: WO 2009/024428

(56) Documents cités:
- US-A1- 2003 192 987
- US-A1- 2004 238 687

## Description

L'invention se rapporte à une nacelle de turboréacteur d'un aéronef.

Un aéronef est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseurs de poussée.

Une nacelle présente généralement une structure tubulaire comprenant une entrée d'air en avant du turboréacteur, une section médiane destinée à entourer une soufflante du turboréacteur, une section arrière pouvant abriter des moyens d'inversion de poussée et destinée à entourer la chambre de combustion du turboréacteur, et est généralement terminée par une tuyère d'éjection dont la sortie est située en aval du turboréacteur.

Les nacelles modernes sont souvent destinées à abriter un turboréacteur double flux apte à générer par l'intermédiaire des pâles de la soufflante en rotation un flux d'air chaud (également appelé flux primaire) issu de la chambre de combustion du turboréacteur.

Une nacelle présente généralement une structure externe, dite Outer Fixed Structure (OFS), qui définit, avec une structure interne concentrique, dite Inner Fixed Structure (IFS), comportant un capot entourant la structure du turboréacteur proprement dite en arrière de la soufflante, un canal annulaire d'écoulement, encore appelé veine, visant à canaliser un flux d'air froid, dit secondaire, qui circule à l'extérieur du turboréacteur. Les flux primaire et secondaire sont éjectés du turboréacteur par l'arrière de la nacelle.

Chaque ensemble propulsif de l'avion est ainsi formé par une nacelle et un turboréacteur, et est suspendu à une structure fixe de l'avion, par exemple sous une aile ou sur le fuselage, par l'intermédiaire d'un pylône ou mât rattaché au turboréacteur ou à la nacelle.

La section arrière de la structure externe de la nacelle est usuellement formée de deux demi-coquilles de forme sensiblement hémicylindrique, de part et d'autre d'un plan vertical longitudinal de symétrie de la nacelle, et montées mobiles de manière à pouvoir se déployer entre une position de travail et une position de maintenance en vue de donner accès au turboréacteur.

Les deux demi-coquilles sont généralement montées pivotantes autour d'un axe longitudinal formant charnière en partie supérieure (à 12 heures) de l'inverseur. Les demi-coquilles sont maintenues en position de fermeture au moyen de verrous disposés le long d'une ligne de jonction située en partie inférieure (à 6 heures).

Chaque demi-coquille est ouverte à l'aide d'au moins un vérin et est maintenue ouverte à l'aide d'au moins une bielle télescopique, ledit vérin et ladite bielle télescopique présentant chacun une première extrémité fixée généralement sur le turboréacteur et une seconde extrémité fixée dans un cadre avant de ladite demi-coquille, ce cadre avant étant l'élément permettant de rattacher la section arrière à une partie fixe de la section médiane de la nacelle. Document US20040238687 montre une nacelle comme décrite ci dessus.

Or, il a été constaté qu'une bielle télescopique peut perdre tout ou partie de ses capacités structurelles et fonctionnelles lorsqu'elle est soumise aux vibrations générées par le moteur durant une certaine période de temps.

Il est déjà connu d'intégrer des ressorts de compression dans le corps de la bielle télescopique afin d'amortir ces vibrations. Néanmoins, ce type de bielle télescopique présente un certain nombre d'inconvénients.

Tout d'abord, l'opérateur doit effectuer des efforts importants de compression lors de l'installation de cette bielle télescopique, ce qui en définitive rend l'opération difficile.

De plus, cette bielle télescopique doit être stockée en magasin dans sa position d'amplitude maximale du fait de la présence d'un ressort de compression interne, d'où une perte de place de stockage.

Par ailleurs, l'intégration d'un ressort de compression nécessite un diamètre élargi du corps de la bielle télescopique, ce qui se traduit par une augmentation de la masse et de l'encombrement.

L'invention a pour but de remédier à tout ou partie des inconvénients évoqués précédemment, et consiste pour cela en une nacelle de turboréacteur comprenant une section avant d'entrée d'air, une section médiane destinée à entourer une soufflante du turboréacteur, et une section arrière formée à partir d'au moins deux demi-coquilles montées mobiles en rotation de manière à pouvoir se déployer chacune entre une position de travail et une position de maintenance sous l'action d'au moins un vérin et d'au moins une bielle télescopique présentant chacun respectivement une première extrémité fixée sur le turboréacteur et une seconde extrémité fixée dans la demi-coquille correspondante, caractérisée en ce qu'elle comprend au moins un organe d'amortissement disposé entre chaque bielle et ladite demi-coquille correspondante, ledit organe d'amortissement étant conçu de manière à être dans un état de précontrainte lorsque la demi-coquille est en position de travail.

Ainsi, le fait de prévoir un organe d'amortissement externe à la bielle télescopique permet d'utiliser tout type de bielle télescopique, notamment une bielle télescopique standard dont le coût de revient est faible, et dont le stockage ne nécessite qu'un minimum de place. De plus, il n'est plus nécessaire de prévoir un diamètre élargi pour le logement du ressort de compression.

Avantageusement, la seconde extrémité du vérin et la seconde extrémité de la bielle sont fixées dans un cadre avant présenté par la demi-coquille correspondante.

Selon un mode réalisation préféré de l'invention, l'organe d'amortissement comprend un ressort à lame.

Préférentiellement, le ressort-à lame présente une première extrémité fixée dans la demi-coquille correspondante et une seconde extrémité en appui sur la bielle.

Préférentiellement encore, la première extrémité du ressort à lame est fixée dans le cadre avant.

La présente invention se rapporte également, d'une part, à un ensemble propulsif comprenant une nacelle selon l'invention disposée autour d'un turboréacteur, et d'autre part, un aéronef comprenant au moins un tel ensemble propulsif.

La mise en oeuvre de l'invention sera mieux comprise à l'aide de la description détaillée qui est exposée ci-dessous en regard du dessin annexé dans lequel :
La figure 1 est une vue schématique en coupe longitudinale d'une nacelle selon l'invention à l'état de fermeture ;
La figure 2 est une vue schématique partielle en coupe transversale de la section arrière représentée à la figure 1, lorsqu'une demi-coquille est respectivement en position de travail et en position de maintenance ;
La figure 3 est une vue agrandie partielle en coupe selon la ligne III-III de la section arrière représentée à la figure 2.

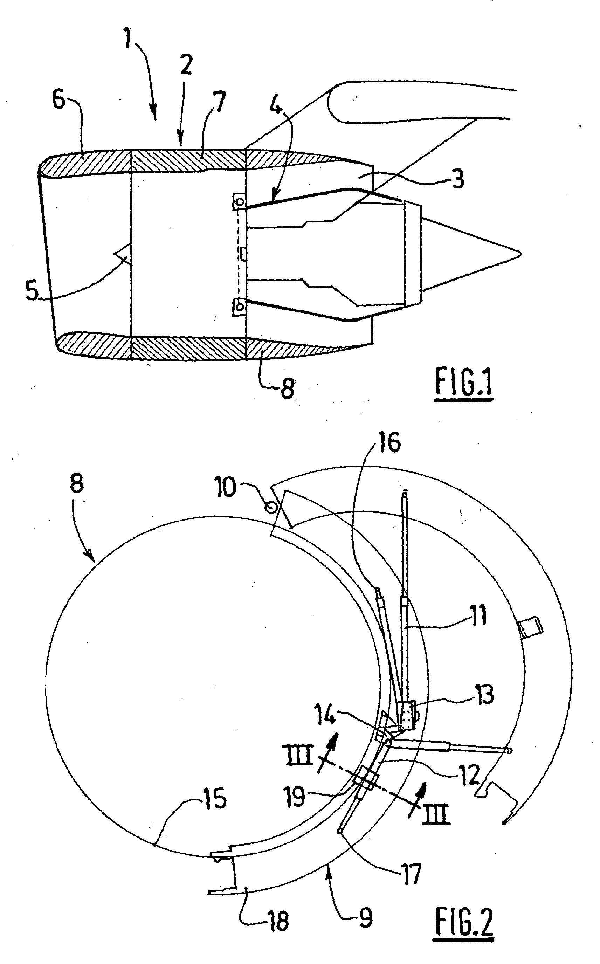

Une nacelle 1 d'un aéronef selon l'invention, telle que représentée à la figure 1, comprend de manière connue en soi une structure externe 2, dite OFS, qui définit un canal annulaire 3 d'écoulement avec une structure interne 4 concentrique entourant la structure du turboréacteur (non représenté) proprement dite en arrière d'une soufflante 5.

Plus précisément, cette structure externe 2 se décompose en une section avant 6 d'entrée d'air, une section médiane 7 destinée à entourer la soufflante 5, et une section arrière 8 formée à partir d'au moins deux demi-coquilles 9.

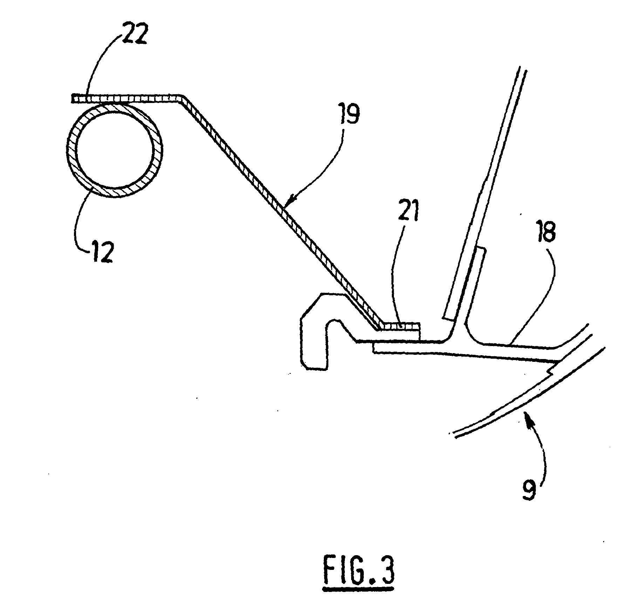

Comme représenté plus spécifiquement aux figures 2 et 3, chacune des deux demi-coquilles 9 est montée mobile en rotation le long d'un axe 10 longitudinal situé en partie supérieure (à 12h), de manière à pouvoir passer alternativement d'une position de travail, où elle est au plus près du turboréacteur, à une position de maintenance, où elle est déployée vers l'extérieur, sous l'action d'au moins un vérin 11 et d'au moins une bielle 12 télescopique présentant chacun respectivement une première extrémité 13, 14 fixée dans le turboréacteur, et une seconde extrémité 16, 17 fixée dans un cadre avant 18 de la demi-coquille 9 correspondante.

Selon l'invention, un organe d'amortissement réalisé sous la forme d'un ressort à lame 19 est disposé entre chaque bielle 12 et ladite demi-coquille 9 correspondante. Ce ressort à lame 19 présente une première extrémité 21 fixée dans le cadre avant 18, par exemple par boulonnage ou encore par tout autre moyen à la disposition de l'homme du métier, et une seconde extrémité 22 en appui sur la bielle 12.

En position de travail, les deux demi-coquilles 9 sont positionnées au plus près du turboréacteur, et sont maintenues de façon classique dans cette position à l'aide d'une pluralité de verrous (non représentés) prévus le long d'une ligne de jonction située en partie inférieure (à 6h).

Le ressort à lame 19 est conçu de manière à se trouver dans un état de précontrainte lorsque la demi-coquille 9 correspondante est en position de travail.

Ainsi, lorsque la demi-coquille 9 représentée à la figure 3 est en position de travail, le ressort à lame 19 est comprimé entre la bielle 12 et le cadre avant 18.

Par conséquent, les contraintes subies par la bielle 12 du fait des vibrations générées par le turboréacteur sont grandement réduites grâce à la présence du ressort à lame 19 qui est actif en permanence.

Ainsi, le fait de prévoir un organe d'amortissement 19 externe à la bielle 12 télescopique permet d'utiliser tout type de bielle télescopique, notamment une bielle télescopique standard dont le coût de revient est faible, et dont le stockage ne nécessite qu'un minimum de place. De plus, il n'est plus nécessaire de prévoir un diamètre élargi pour le logement de l'organe d'amortissement 19.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Nacelle (1) de turboréacteur comprenant une section avant (6) d'entrée d'air, une section médiane (7) destinée à entourer une soufflante (5) du turboréacteur, et une section arrière (8) formée à partir d'au moins deux demi-coquilles (9) montées mobiles en rotation de manière à pouvoir se déployer chacune entre une position de travail et une position de maintenance sous l'action d'au moins un vérin (11) et d'au moins une bielle (12) télescopique présentant chacun respectivement une première extrémité (13, 14) fixée sur le turboréacteur et une seconde extrémité (16, 17) fixée dans la demi-coquille correspondante, **caractérisée en ce qu'**elle comprend au moins un organe d'amortissement (19) disposé entre chaque bielle et ladite demi-coquille correspondante, ledit organe d'amortissement étant conçu de manière à être dans un état de précontrainte lorsque la demi-coquille est en position de travail.

2. Nacelle (1) selon la revendication 1, **caractérisée en ce que** la seconde extrémité (16) du vérin (11) et la seconde extrémité (17) de la bielle (12) sont fixées dans un cadre avant (18) présenté par la demi-coquille (19) correspondante.

3. Nacelle (1) selon l'une quelconque des revendications 1 ou 2, **caractérisée en ce que** l'organe d'amortissement comprend un ressort à lame (19).

4. Nacelle (1) selon la revendication 3, **caractérisée en ce que** le ressort à lame (19) présente une première extrémité (21) fixée dans la demi-coquille (9) correspondante et une seconde extrémité (22) en appui sur la bielle (12).

5. Nacelle (1) selon la revendication 4, **caractérisée en ce que** la première extrémité (21) du ressort à lame (12) est fixée dans le cadre avant (18).

6. Ensemble propulsif, **caractérisé en ce qu'**il comprend une nacelle (1) selon l'une quelconque des revendications 1 à 5 disposée autour d'un turboréacteur.

7. Aéronef, **caractérisé en ce qu'**il comprend au moins un ensemble propulsif selon la revendication 6.

## Claims

1. A jet engine nacelle (1) comprising an air intake forward section (6), a mid-section (7) intended to surround a fan (5) of the jet engine, and an aft section (8) formed from at least two half-shells (9) rotatably mounted such that they can each be opened out between a working position and a maintenance position under the action of at least one jack (11) and at least one telescopic connecting rod (12) each respectively having a first end (13, 14) fastened on the jet engine and a second end (16, 17) fastened in the corresponding half-shell, **characterized in that** it comprises at least one damping member (19) arranged between each connecting rod and said corresponding half-shell, said damping member being designed so as to be in a prestressed state when the half-shell is in the working position.

2. The nacelle (1) as claimed in claim 1, **characterized in that** the second end (16) of the jack (11) and the second end (17) of the connecting rod (12) are fastened in a forward frame (18) that is part of the corresponding half-shell (19) .

3. The nacelle (1) as claimed in either of claims 1 and 2, **characterized in that** the damping member comprises a leaf spring (19).

4. The nacelle (1) as claimed in claim 3, **characterized in that** the leaf spring (19) has a first end (21) fastened in the corresponding half-shell (9) and a second end (22) pressing on the connecting rod (12).

5. The nacelle (1) as claimed in claim 4, **characterized in that** the first end (21) of the leaf spring (12) is fastened in the forward frame (18).

6. A propulsion assembly, **characterized in that** it comprises a nacelle (1) as claimed in any of claims 1 to 5 arranged around a jet engine.

7. An aircraft, **characterized in that** it comprises at least one propulsion assembly as claimed in claim 6.

## Patentansprüche

1. Turbotriebwerksrumpf (1), der einen vorderen Lufteintritts-Abschnitt (6), einen mittleren Abschnitt (7), der dazu bestimmt ist, ein Gebläse (5) des Turbotriebwerks zu umschließen, und einen hinteren Abschnitt (8) umfasst, der von mindestens zwei Halbschalen (9) gebildet wird, die rotierend bewegbar montiert sind, so dass sich jede unter Einwirkung mindestens eines Zylinders (11) und mindestens einer Teleskopstange (12), die jeweils ein erstes, am Turbotriebwerk befestigtes Ende (13, 14) und ein zweites, in der entsprechenden Halbschale befestigtes Ende (16, 17) aufweisen, zwischen einer Arbeitsstellung und einer Wartungsstellung bewegen kann, **dadurch gekennzeichnet, dass** er mindestens ein Dämpfungsorgan (19) umfasst, das zwischen jeder Stange und der entsprechenden Halbschale angeordnet ist, wobei das Dämpfungsorgan derart ausgebildet ist, dass es in einem Vorspannungszustand ist, wenn die Halbschale in Arbeitsstellung ist.

2. Rumpf (1) nach Anspruch 1, **dadurch gekennzeichnet, dass** das zweite Ende (16) des Zylinders (11) und das zweite Ende (17) der Stange (12) in einem vorderen Rahmen (18) befestigt sind, der von der entsprechenden Halbschale (19) dargestellt wird.

3. Rumpf (1) nach einem der Ansprüche 1 oder 2, **dadurch gekennzeichnet, dass** das Dämpfungsorgan eine Blattfeder (19) umfasst.

4. Rumpf (1) nach Anspruch 3, **dadurch gekennzeichnet, dass** die Blattfeder (19) ein erstes Ende (21) aufweist, das in der entsprechenden Halbschale (9) befestigt ist, und ein zweites Ende (22), das sich auf der Stange (12) abstützt.

5. Rumpf (1) nach Anspruch 4, **dadurch gekennzeichnet, dass** das erste Ende (21) der Blattfeder (12) im vorderen Rahmen (18) befestigt ist.

6. Antriebsgruppe, **dadurch gekennzeichnet, dass** sie mindestens einen Rumpf (1) nach einem der Ansprüche 1 bis 5 umfasst, der um ein Turbotriebwerk angeordnet ist.

7. Luftfahrzeug, **dadurch gekennzeichnet, dass** es mindestens eine Antriebsgruppe nach Anspruch 6 umfasst.
